# EUROPEAN PATENT APPLICATION

(11) **EP 4 838 744 A1**
(43) Date of publication of application: **11.11.2026**
(21) Application number: 24918203.1
(22) Date of filing: 14.11.2024
(51) Int. Cl.: H02J 7/00, H02J 7/02, B60L 53/60

(54) **CHARGING DEVICE**

(30) Priority: 19.01.2024 CN 202420143382 U
(71) Applicant: Huawei Digital Power Technologies Co., Ltd., Shenzhen, Guangdong 518043 (CN)
(72) Inventor: LI, Hengqu, Shenzhen, Guangdong 518043 (CN); YU, Tao, Shenzhen, Guangdong 518043 (CN); SHI, Chuanqi, Shenzhen, Guangdong 518043 (CN)
(74) Representative: Maiwald GmbH
(86) International application number: PCT/CN2024/131997
(87) International publication number: WO 2025/152594

(57) **Abstract**

This application discloses a charging apparatus, and relates to the field of energy technologies. In this application, an accommodating cavity of a cabinet body of a charging power unit in the charging apparatus may be divided into a first accommodating cavity and a second accommodating cavity in a first direction, a plurality of power conversion modules of the charging power unit are stacked in a second direction in the first accommodating cavity, and a plurality of power allocation modules of the charging power unit are stacked in the second direction in the second accommodating cavity. Because the first accommodating cavity is different from the second accommodating cavity, the plurality of power conversion modules and the plurality of power allocation modules may be stacked in different spaces. In addition, the plurality of power conversion modules and the plurality of power allocation modules are stacked in a same direction, but the stacking direction is different from an arrangement direction of the accommodating cavities. Therefore, in this application, a disadvantage caused by the stacking direction and the arrangement direction of the accommodating cavities being the same can be avoided as much as possible.

## Description

This application claims priority to Chinese Patent Application No. 202420143382.2, filed with the China National Intellectual Property Administration on January 19, 2024 and entitled "CHARGING APPARATUS", which is incorporated herein by reference in its entirety.

### TECHNICAL FIELD

This application relates to the field of energy technologies, and in particular, to a charging apparatus.

### BACKGROUND

With rapid development of the new energy vehicle industry, charging power of electric vehicles gradually increases, and charging requirements become increasingly diversified. To meet charging requirements of different vehicles and improve power utilization, modular charging power units have gained increasing attention and development.

Currently, modular charging power units mostly use an architecture in which modules are longitudinally stacked and an air-liquid heat exchanger is disposed at the top. In other words, modules in a charging power unit are stacked in a vertical direction, and an air-liquid heat exchanger is placed at the top of the charging power unit. However, a larger quantity of longitudinally stacked modules in this architecture indicates a larger overall height of the modular charging power unit, and therefore, the modular charging power unit cannot be arranged at a place with a limited height.

### SUMMARY

According to a first aspect, a charging apparatus in this application is provided. The charging apparatus includes a charging power unit, and the charging power unit includes a cabinet body, a plurality of power conversion modules, and a plurality of power allocation modules. The cabinet body includes a first accommodating cavity and a second accommodating cavity. The first accommodating cavity and the second accommodating cavity are sequentially arranged in a first direction and are spaced apart. The plurality of power conversion modules are configured to convert an input alternating current into a direct current. The plurality of power allocation modules are configured to perform power allocation on the direct current output by the plurality of power conversion modules. The plurality of power conversion modules are stacked in a second direction in the first accommodating cavity, where the first direction is different from the second direction. The plurality of power allocation modules are stacked in the second direction in the second accommodating cavity.

It can be learned that, in this embodiment, an accommodating cavity of the cabinet body of the charging power unit may be divided into the first accommodating cavity and the second accommodating cavity in the first direction, it is set that the plurality of power conversion modules of the charging power unit are stacked in the second direction in the first accommodating cavity, and it is set that the plurality of power allocation modules of the charging power unit are stacked in the second direction in the second accommodating cavity. Because the first accommodating cavity is different from the second accommodating cavity, the plurality of power conversion modules and the plurality of power allocation modules may be stacked in different spaces. In addition, the plurality of power conversion modules and the plurality of power allocation modules are stacked in a same direction, but the stacking direction is different from an arrangement direction of accommodating cavities. Therefore, in this embodiment, a disadvantage caused by the stacking direction and the arrangement direction of the accommodating cavities being the same can be avoided as much as possible. For example, when the stacking direction and the arrangement direction of the accommodating cavities are the same and are both longitudinal or vertical directions, an overall height of the charging power unit is excessively large.

Optionally, the first direction is a longitudinal or a vertical direction, and the second direction is a lateral or a horizontal direction. In this way, in this embodiment, the stacking direction of the plurality of power conversion modules and the plurality of power allocation modules in the charging power unit may be changed from original longitudinal stacking to lateral stacking. That is, the plurality of power conversion modules and the plurality of power allocation modules are changed from being stacked in the vertical direction originally to being stacked in the horizontal direction. In this way, the stacking direction of the plurality of power conversion modules and the plurality of power allocation modules is changed, to avoid an excessively large height of the charging power unit as much as possible.

Optionally, the first direction is a Z direction or a Y direction in a three-dimensional coordinate system, and the second direction is an X direction in the three-dimensional coordinate system. In this way, it is set that the stacking direction of the plurality of power conversion modules and the plurality of power allocation modules is the X direction, to avoid the excessively large height of the charging power unit as much as possible.

Optionally, the plurality of power conversion modules are stacked in a single row or a plurality of rows in the second direction in the first accommodating cavity; and the plurality of power allocation modules are stacked in a single row or a plurality of rows in the second direction in the second accommodating cavity.

In this way, in this application, whether the plurality of power conversion modules or the plurality of power allocation modules are stacked in a single row or a plurality of rows in the accommodating cavity of the cabinet body is flexibly set as required. When the plurality of power conversion modules or the plurality of power allocation modules are stacked in a single row, in this embodiment, the plurality of power conversion modules or the plurality of power allocation modules can be stacked simply and quickly. When the plurality of power conversion modules or the plurality of power allocation modules are stacked in a plurality of rows, in this embodiment, more power conversion modules or power allocation modules are placed in the limited cabinet body, to improve space utilization.

Optionally, the plurality of power conversion modules include a plurality of alternating-current rectifier modules and a plurality of direct-current voltage regulation modules. The plurality of alternating-current rectifier modules are configured to convert an alternating current input into the charging power unit into a direct current. The plurality of direct-current voltage regulation modules are configured to regulate a voltage of the direct current output by the plurality of alternating-current rectifier modules. The plurality of alternating-current rectifier modules and the plurality of direct-current voltage regulation modules are stacked in the second direction in the first accommodating cavity.

In this way, the alternating-current rectifier modules and the direct-current voltage regulation modules convert the alternating current into the direct current and regulate the voltage of the direct current.

Optionally, a part of the plurality of direct-current voltage regulation modules are located on one side of the plurality of alternating-current rectifier modules, and the remaining part of the plurality of direct-current voltage regulation modules are located on the other side of the plurality of alternating-current rectifier modules.

In this way, when a quantity of direct-current voltage regulation modules needs to be reduced, in this embodiment, a direct-current voltage regulation module located on one side of the plurality of alternating-current rectifier modules may be removed quickly and conveniently, to avoid a large amount of adjustment performed on the entire stacked power conversion modules, so as to reduce an adjustment workload and time.

Optionally, the plurality of direct-current voltage regulation modules are entirely located on one side of the plurality of alternating-current rectifier modules.

In this way, because all the direct-current voltage regulation modules are stacked together, and all the alternating-current rectifier modules are stacked together, in this embodiment, a specific quantity of direct-current voltage regulation modules may be removed quickly and conveniently from all the direct-current voltage regulation modules, or a specific quantity of alternating-current rectifier modules may be removed from all the alternating-current rectifier modules without affecting stacking between other modules.

Optionally, the plurality of alternating-current rectifier modules are connected through an alternating-current busbar, and the alternating-current busbar is configured to transmit an alternating current.

In this way, through the alternating-current busbar, the alternating current can be input into the plurality of alternating-current rectifier modules and transmitted between the plurality of alternating-current rectifier modules.

Optionally, the alternating-current busbar has a photovoltaic power integration function. The alternating-current busbar has the photovoltaic power integration function. It may be understood that the alternating-current busbar can transmit an alternating current output by a photovoltaic power generation system.

It can be learned that the charging apparatus in this embodiment may be connected to the photovoltaic power generation system, and convert, by using the alternating-current rectifier modules, the alternating current output by the photovoltaic power generation system into a direct current. In this way, the charging apparatus in this embodiment may charge an electric vehicle by using the alternating current of the photovoltaic power generation system.

Optionally, the plurality of alternating-current rectifier modules are connected to the plurality of direct-current voltage regulation modules through a direct-current busbar, and the direct-current busbar is configured to transmit a direct current.

In this way, through the direct-current busbar, the direct current output by the plurality of alternating-current rectifier modules can be transmitted to the plurality of direct-current voltage regulation modules, and the direct current can be transmitted between the plurality of direct-current voltage regulation modules.

Optionally, the direct-current busbar has a stackable energy storage function. The direct-current busbar has the stackable energy storage function. It may be understood that the direct-current busbar can transmit a direct current output by an energy storage device. The energy storage device is a device that can store a direct current.

It can be learned that the charging apparatus in this embodiment may be connected to the energy storage device and may regulate a voltage of the direct current output by the energy storage device by using the direct-current voltage regulation modules. In this way, the charging apparatus in this embodiment may charge the electric vehicle by using the direct current of the energy storage device.

Optionally, a part of the plurality of alternating-current rectifier modules are connected to a part of the plurality of direct-current voltage regulation modules through a first direct-current busbar, and the remaining part of the plurality of alternating-current rectifier modules are connected to the remaining part of the plurality of direct-current voltage regulation modules through a second direct-current busbar. The first direct-current busbar and the second direct-current busbar are configured to transmit direct currents, and the first direct-current busbar is different from the second direct-current busbar.

It can be learned that, in this embodiment, a part of the alternating-current rectifier modules may be connected to a part of the direct-current voltage regulation modules through the first direct-current busbar, and the remaining part of the alternating-current rectifier modules may be connected to the remaining part of the direct-current voltage regulation modules through the second direct-current busbar. In this way, when the alternating-current rectifier modules and the direct-current voltage regulation modules need to be reduced, in this embodiment, a line of a direct-current busbar may be conveniently and quickly adjusted, and a line of another direct-current busbar is not adjusted, so that an adjustment amount of the line of the direct-current busbar is reduced.

Optionally, the first direct-current busbar, the second-direct current busbar, or both have the stackable energy storage function.

It can be learned that the charging apparatus in this embodiment may be connected to the energy storage device and may regulate the voltage of the direct current output by the energy storage device by using the direct-current voltage regulation modules. In this way, the charging apparatus in this embodiment may charge the electric vehicle by using the direct current of the energy storage device.

Optionally, the plurality of direct-current voltage regulation modules are directly plugged into the plurality of power allocation modules.

In this way, a transmission loss of the direct current between the plurality of direct-current voltage regulation modules and the plurality of power allocation modules can be reduced through direct insertion, and line arrangement between the plurality of direct-current voltage regulation modules and the plurality of power allocation modules is reduced, to reduce use of a line material and improve space utilization.

Optionally, a ratio of a quantity of the plurality of alternating-current rectifier modules to a quantity of the plurality of direct-current voltage regulation modules is inversely proportional to a ratio of power of the plurality of alternating-current rectifier modules to power of the plurality of direct-current voltage regulation modules.

It can be learned that because the alternating-current rectifier modules are configured to convert the alternating current input into the charging power unit into the direct current, and the direct-current voltage regulation modules are configured to regulate the voltage of the direct current output by the alternating-current rectifier modules, in this embodiment, it needs to be ensured that the ratio of the quantity of alternating-current rectifier modules to the quantity of direct-current voltage regulation modules is inversely proportional to the ratio of the power of the plurality of alternating-current rectifier modules to the power of the plurality of direct-current voltage regulation modules. In this way, the quantity of alternating-current rectifier modules multiplied by the power of one alternating-current rectifier module may be equal to the quantity of direct-current voltage regulation modules multiplied by the power of one direct-current voltage regulation module.

Optionally, the charging power unit further includes an alternating-current input module. The alternating-current input module is configured to receive an alternating current and input the alternating current into the plurality of power conversion modules. The alternating-current input module and the plurality of power allocation modules are stacked in the second direction in the second accommodating cavity.

In this way, through the alternating-current input module, an alternating current may be input into the charging power unit from the outside, and the alternating current may be transmitted to the power conversion modules for processing.

Optionally, a part of the plurality of power allocation modules are located on one side of the alternating-current input module, and the remaining part of the plurality of power allocation modules are located on the other side of the alternating-current input module.

In this way, when a quantity of power allocation modules needs to be reduced, in this embodiment, a power allocation module located on one side of the alternating-current input module may be removed quickly and conveniently, to avoid a large amount of adjustment performed on the entire stacked power allocation modules, so as to reduce an adjustment workload and time.

Optionally, the plurality of power allocation modules are entirely located on one side of the alternating-current input module.

In this way, because all the power allocation modules are stacked together, in this embodiment, a specific quantity of power allocation modules can be removed quickly and conveniently from all the power allocation modules without affecting stacking between other modules.

Optionally, the charging power unit further includes a liquid-cooling heat dissipation module. The liquid-cooling heat dissipation module is configured to: perform heat exchange with an external environment and transfer a cooled coolant to a module of the charging power unit through a liquid-cooling pipeline. The cabinet body further includes a third accommodating cavity. The third accommodating cavity and the first and second accommodating cavities are sequentially arranged in the first direction or the second direction and are spaced apart. The liquid-cooling heat dissipation module is located in the third accommodating cavity.

In this way, the liquid-cooling heat dissipation module can perform heat dissipation for a module (such as the power conversion modules or the power allocation modules) of the charging power unit.

Optionally, the third accommodating cavity is disposed on one side or two sides of the first accommodating cavity and the second accommodating cavity.

In this way, in this application, a location of the liquid-cooling heat dissipation module in the cabinet body may be flexibly set.

Optionally, the cabinet includes a plurality of cabinet doors, and the plurality of cabinet doors are disposed opposite to each other in the first direction or the second direction.

In this way, an internal space of the cabinet body may be opened through the plurality of cabinet doors, to facilitate arrangement of modules in the cabinet body.

Optionally, the charging apparatus further includes at least one charging terminal, and the at least one charging terminal is configured to output a direct current allocated by the plurality of power allocation modules. The charging power unit further includes a charging connection module, and the charging connection module is configured to connect the charging power unit and the at least one charging terminal. The cabinet body further includes a fourth accommodating cavity. The fourth accommodating cavity and the first and second accommodating cavities are sequentially arranged in the second direction and are spaced apart. The charging connection module is located in the fourth accommodating cavity.

In this way, the charging power unit can be connected to the at least one charging terminal through the charging connection module, to form an integrated charging device integrating the charging power unit and the charging terminal.

Optionally, the at least one charging terminal includes at least one charging connector, the at least one charging connector is disposed on a first outer side surface of the cabinet body, and the first outer side surface faces the second direction.

In this way, the at least one charging connector can be used to implement connection to the electric vehicle, and charge the electric vehicle.

### BRIEF DESCRIPTION OF DRAWINGS

FIG. 1 is a diagram of a charging scenario according to an embodiment of this application;
FIG. 2 is a diagram of functional modules of a charging apparatus according to an embodiment of this application;
FIG. 3 is a diagram of an architecture of a modular charging power unit in which modules are longitudinally stacked according to an embodiment;
FIG. 4 is a diagram of a structure of a charging power unit according to an embodiment;
FIG. 5 is a schematic top view of a structure of a charging power unit along a Z-axis according to this application;
FIG. 6 is another schematic top view of a structure of a charging power unit along a Z-axis according to an embodiment;
FIG. 7 is a diagram of another structure of a charging power unit according to an embodiment;
FIG. 8 is a diagram of a front-side structure of a charging power unit along a Y-axis according to an embodiment;
FIG. 9 is a diagram of another front-side structure of a charging power unit along a Y-axis according to an embodiment;
FIG. 10 is a diagram of another structure of the charging power unit shown in FIG. 8 according to an embodiment;
FIG. 11 is a diagram of another structure of the charging power unit shown in FIG. 9 according to an embodiment;
FIG. 12 is a diagram of another structure of the charging power unit shown in FIG. 8 according to an embodiment;
FIG. 13 is a diagram of another structure of the charging power unit shown in FIG. 8 according to an embodiment;
FIG. 14 is a diagram of another structure of the charging power unit shown in FIG. 9 according to an embodiment;
FIG. 15 is a diagram of another structure of the charging power unit shown in FIG. 13 according to an embodiment;
FIG. 16 is a diagram of another structure of the charging power unit shown in FIG. 14 according to an embodiment;
FIG. 17 is a diagram of another structure of the charging power unit shown in FIG. 4 according to an embodiment;
FIG. 18 is a diagram of another structure of the charging power unit shown in FIG. 4 according to an embodiment;
FIG. 19 is a diagram of another structure of the charging power unit shown in FIG. 4 according to an embodiment;
FIG. 20 is a diagram of another structure of the charging power unit shown in FIG. 7 according to an embodiment;
FIG. 21 is a diagram of another structure of the charging power unit shown in FIG. 4 according to an embodiment;
FIG. 22 is a diagram of another structure of the charging power unit shown in FIG. 4 according to an embodiment;
FIG. 23 is a diagram of another structure of a charging apparatus in which the charging power unit shown in FIG. 17 is located according to this embodiment;
FIG. 24 is a diagram of another structure of the charging apparatus shown in FIG. 23 according to an embodiment; and
FIG. 25 is a diagram of another structure of the charging apparatus shown in FIG. 23 according to this embodiment.

### DESCRIPTION OF EMBODIMENTS

To better understand technical solutions in this application, the following clearly and completely describes the technical solutions in this application with reference to the accompanying drawings in this application. It is clear that the described embodiments are merely a part rather than all of embodiments of this application. All other embodiments obtained by a person skilled in the art based on descriptions of embodiments of this application without creative efforts shall fall within the protection scope of this application.

It should be understood that the terms "first" and "second" in this application are intended to distinguish between different objects but do not indicate a specific sequence. In addition, the terms "including" and "having" and any other variants thereof are intended to cover a non-exclusive inclusion. For example, a process, a method, software, a product, or a device that includes a series of steps or units is not limited to the listed steps or units, but further includes unlisted steps or units, or further includes another inherent step or unit of the process, the method, the product, or the device.

An "embodiment" in this application means that a particular feature, structure, or characteristic described with reference to this embodiment may be included in at least one embodiment of this application. The phrase shown in various locations in this specification may not necessarily refer to a same embodiment, and is not an independent or optional embodiment exclusive from another embodiment. In addition, embodiments described in this specification may be combined with another embodiment.

The term "and/or" in embodiments of this application may describe an association relationship between associated objects, and there may be three relationships. For example, A and/or B may indicate the following three cases: "A", "B", and "A and B". A and B may be in a singular form or a plural form.

The symbol "/" in embodiments of this application may indicate an "or" relationship between the associated objects. In addition, the symbol "/" may also indicate a division sign, that is, to perform a division operation. For example, A/B may indicate that A is divided by B.

In embodiments of this application, "at least one item (piece) "or a similar expression thereof means any combination of these items, including any combination of a single item (piece) or a plurality of items (pieces), and means one or more. "A plurality of" means two or more. For example, at least one item (piece) of a, b, or c may indicate the following seven cases: "a", "b", "c", "a and b", "a and c", "b and c", and "a, b, and c". Each of a, b, and c may be an element, or may be a set that includes one or more elements.

"Coupling" and "connection" in embodiments of this application may indicate an electrical connection, and may include a direct connection through a wire or a connection end or an indirect connection through another device (for example, an inductor, a capacitor, or a resistor). Therefore, "coupling" and "connection" may be considered as an electronic communication connection in a broad sense. In addition, the displayed or discussed mutual couplings/direct couplings/connections may be indirect couplings or connections through some interfaces, apparatuses, units, or devices, and may be implemented in communication, electrical, or other forms.

Circuits or other components in embodiments of this application may be described as "configured to" perform one or more tasks. In this case, "configured to" may be used for implying a structure by indicating that the circuits/components include a structure (for example, a circuit system) that performs one or more tasks during an operation. Therefore, even when a specified circuit/component is currently not operable, the circuit/component may also be referred to as being configured to perform the task. Circuits/components used with the phrase "configured to" include hardware, for example, a circuit for performing an operation.

The charging apparatus is a device that converts an alternating current into a direct current and provides a charging requirement for an electric vehicle.

Optionally, the charging apparatus may include a charging power unit and a charging terminal. In other words, the charging apparatus may be an integrated charging device integrating the charging power unit and the charging terminal.

The charging power unit is a device that converts an alternating current into a direct current, performs voltage regulation on the direct current, and then allocates a direct current obtained through voltage regulation, that is, a device for performing power conversion and power allocation. The charging power unit may usually include components such as a rectifier, a filter, a transformer, and an inverter.

The charging terminal is a device that receives a direct current output by a charging power unit, connects to an electric vehicle, and charges the electric vehicle. The charging terminal may usually include a socket, a connection line, and a related control circuit. A user may insert a charging plug of the electric vehicle into the socket of the charging terminal, and connect the charging terminal to the electric vehicle through the connection line.

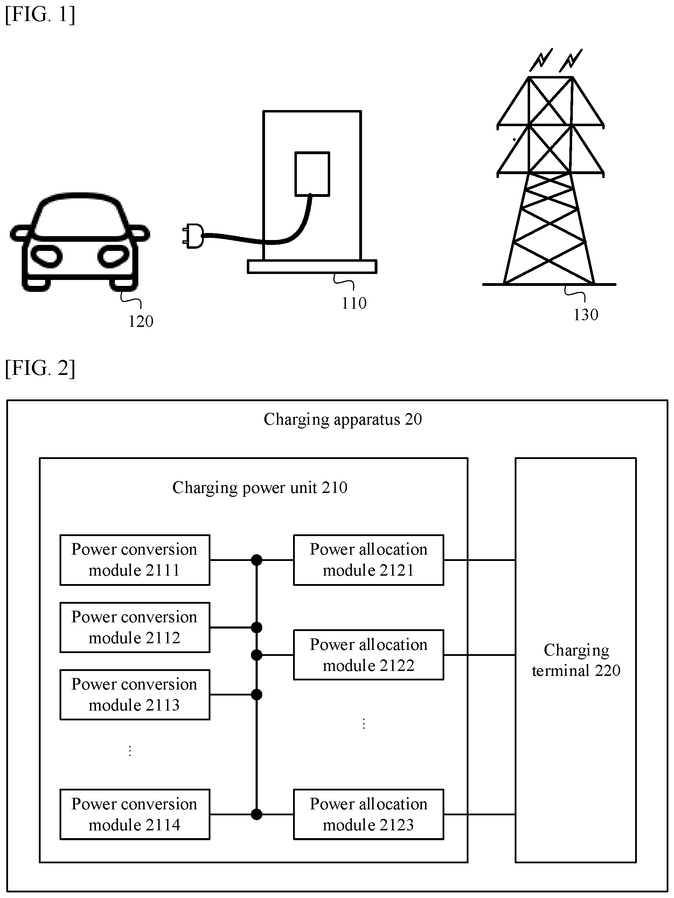

The following describes a charging scenario provided by a charging apparatus by using an example. FIG. 1 is a diagram of a charging scenario according to an embodiment. In FIG. 1, the charging apparatus 110 may be used in a scenario of charging an electric vehicle 120. An input end of the charging apparatus 110 may be connected to a power grid 130, and an output end of the charging apparatus 110 may be connected to the electric vehicle 120. The charging apparatus 110 may convert an alternating current in the power grid 130 into a direct current, and allocate the direct current to the electric vehicle 120 after performing voltage regulation on the direct current, to charge the electric vehicle 120. Electric energy in the power grid 130 may be industrial electricity, civil electricity, or the like.

Functions of the charging apparatus may be modularized. In other words, the charging apparatus is divided into different functional modules based on different functions of the charging apparatus, and a form of an interface between different functional modules is fixed or has an evolution relationship with corresponding power. In this way, in this embodiment, different functions may be implemented based on different functional modules, and a capability of the charging apparatus can be adjusted by increasing or decreasing a quantity of functional modules.

For example, for modularization of a power conversion function of the charging apparatus, a power conversion module may be introduced in this embodiment. The power conversion module may be configured to convert an alternating current into a direct current, and perform voltage regulation on the direct current. The power conversion module may be referred to as a power module. In addition, there may be a plurality of power conversion modules, and a quantity of power conversion modules may be continuously adjusted as required, so that a power conversion capability of the charging apparatus is adjusted by increasing or decreasing the quantity of power conversion modules. Generally, a larger quantity of power conversion modules indicates a larger power conversion capability of the charging apparatus.

For another example, for modularization of a power allocation function of the charging apparatus, a power allocation module may be introduced in this embodiment. The power allocation module may be configured to allocate, to a charging terminal, a direct current obtained through voltage regulation performed by the power conversion module. The power allocation module may be referred to as a power matrix. In addition, there may be a plurality of power allocation modules, and a quantity of power allocation modules may be continuously adjusted as required, so that a power allocation capability of the charging apparatus is adjusted by increasing or decreasing the quantity of power allocation modules. Generally, a larger quantity of power allocation modules indicates a larger power allocation capability of the charging apparatus.

The following describes modularization of the charging apparatus by using an example. FIG. 2 is a diagram of functional modules of a charging apparatus according to this embodiment. In FIG. 2, the charging apparatus 20 includes a charging power unit 210 and a charging terminal 220. The charging power unit 210 includes a plurality of power conversion modules (for example, a power conversion module 2111, a power conversion module 2112, a power conversion module 2113, and a power conversion module 2114) and a plurality of power allocation modules (for example, a power allocation module 2121, a power allocation module 2122, and a power allocation module 2123).

Currently, modules in a modular charging power unit mostly use an architecture in which modules are longitudinally stacked and an air-liquid heat exchanger is disposed at the top. In other words, the modules in the charging power unit are stacked in a vertical direction, and the air-liquid heat exchanger is placed at the top of the charging power unit. However, a larger quantity of longitudinally stacked modules in this architecture indicates a larger overall height of the modular charging power unit, and therefore, the modular charging power unit cannot be arranged at a place with a limited height.

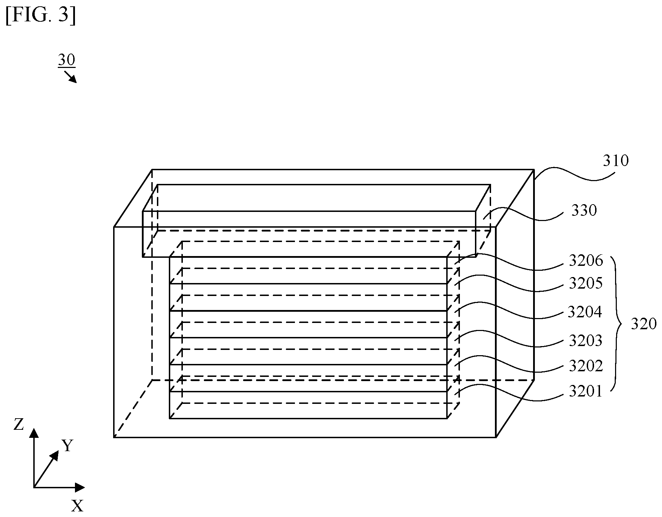

For example, an example in which a longitudinal direction is a Z direction in a three-dimensional coordinate system is used. FIG. 3 is a diagram of an architecture of a modular charging power unit in which modules are longitudinally stacked according to this embodiment. In FIG. 3, a charging power unit 30 includes a cabinet 310, a plurality of power conversion modules 320 (for example, a power conversion module 3201, a power conversion module 3202, a power conversion module 3203, a power conversion module 3204, a power conversion module 3205, and a power conversion module 3206), and an air-liquid heat exchanger 330. The plurality of power conversion modules are sequentially stacked from bottom to top in the Z direction, and the air-liquid heat exchanger 330 is placed at the top of the cabinet 310. In this way, in a high-power scenario, a larger quantity of power conversion modules is required in this architecture, and an overall height of the charging power unit 30 is larger due to the larger quantity of power conversion modules. As a result, the charging power unit 30 cannot be arranged at a place with a limited height.

Because the modular charging power unit uses the architecture in which the modules are longitudinally stacked and the air-liquid heat exchanger is disposed at the top cannot be used at the place with the limited height, in this embodiment, a stacking direction of the modules needs to be optimized, to avoid an excessively large height of the modular charging power unit as much as possible.

In the following description in this embodiment, the "modular charging power unit" is referred to as a "charging power unit" for short, and how to optimize the stacking direction of the modules is described by using the following plurality of solutions. Same content in different solutions may be mutually referenced, and details are not described herein again.

### [Solution 1]

In "Solution 1", in this embodiment, a stacking direction of a plurality of power conversion modules and a plurality of power allocation modules in a charging power unit may be changed from original longitudinal stacking to lateral stacking. In other words, the plurality of power conversion modules and the plurality of power allocation modules are changed from being stacked in a vertical direction originally to being stacked in a horizontal direction. In this way, the stacking direction of the plurality of power conversion modules and the plurality of power allocation modules is changed, to avoid an excessively large height of the modular charging power unit as much as possible.

In the following description in this embodiment, an example in which the longitudinal direction is the Z direction in the three-dimensional coordinate system, and the lateral direction is an X direction in the three-dimensional coordinate system is used for specific description.

In "Solution 1", in this embodiment, an accommodating cavity of a cabinet body of the charging power unit may be divided into two accommodating cavities: an upper accommodating cavity and a lower accommodating cavity (for ease of description, the two accommodating cavities are respectively a "first accommodating cavity" and a "second accommodating cavity") in the Z direction (for ease of description, the "Z direction" herein may be referred to as a "first direction"). Then the plurality of power conversion modules are placed in the first accommodating cavity, and the plurality of power allocation modules are placed in the second accommodating cavity. The plurality of power conversion modules are stacked in the X direction in the first accommodating cavity, and the plurality of power allocation modules are stacked in the X direction (for ease of description, the "X direction" herein may be referred to as a "second direction") in the second accommodating cavity.

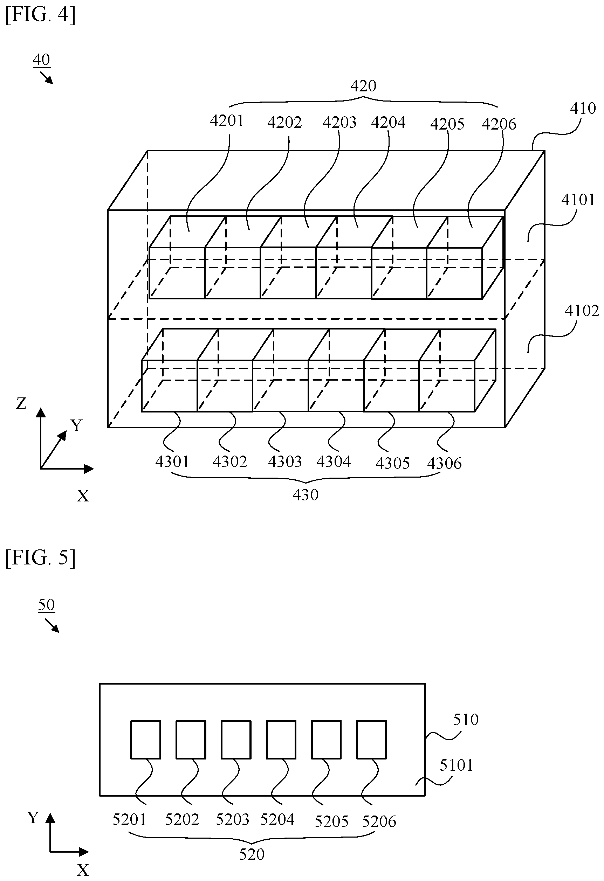

For example, FIG. 4 is a diagram of a structure of a charging power unit according to this embodiment. In FIG. 4, a charging power unit 40 includes a cabinet 410, a plurality of power conversion modules 420 (for example, a power conversion module 4201, a power conversion module 4202, a power conversion module 4203, a power conversion module 4204, a power conversion module 4205, and a power conversion module 4206), and a plurality of power allocation modules 430 (for example, a power allocation module 4301, a power allocation module 4302, a power allocation module 4303, a power allocation module 4304, a power allocation module 4305, and a power allocation module 4306). An accommodating cavity of the cabinet 410 is divided into an upper first accommodating cavity 4101 and a lower second accommodating cavity 4102 in the Z direction. The plurality of power conversion modules 420 are stacked in the X direction in the first accommodating cavity 4101, and the plurality of power allocation modules 430 are stacked in the X direction in the second accommodating cavity 4102.

Optionally, the plurality of power conversion modules are stacked in a single row or a plurality of rows in the first accommodating cavity; and the plurality of power allocation modules are stacked in a single row or a plurality of rows in the second accommodating cavity.

In this way, in this embodiment, whether the plurality of power conversion modules or the plurality of power allocation modules are stacked in a single row or a plurality of rows in the accommodating cavity of the cabinet body is flexibly set as required. When the plurality of power conversion modules or the plurality of power allocation modules are stacked in a single row, in this embodiment, the plurality of power conversion modules or the plurality of power allocation modules can be stacked simply and quickly. When the plurality of power conversion modules or the plurality of power allocation modules are stacked in a plurality of rows, in this embodiment, more power conversion modules or power allocation modules are placed in the limited cabinet body, to improve space utilization.

For example, in FIG. 4, the plurality of power conversion modules 420 are stacked in a single row in the X direction in the first accommodating cavity 4101, and the plurality of power allocation modules 430 are stacked in a single row in the X direction in the second accommodating cavity 4102.

For another example, FIG. 5 is a schematic top view of a structure of a charging power unit along a Z-axis according to this embodiment. In FIG. 5, a charging power unit 50 includes a cabinet 510 and a plurality of power conversion modules 520 (for example, a power conversion module 5201, a power conversion module 5202, a power conversion module 5203, a power conversion module 5204, a power conversion module 5205, and a power conversion module 5206). The plurality of power conversion modules 520 are stacked in a single row in the X direction in the first accommodating cavity 4101 of the cabinet 510.

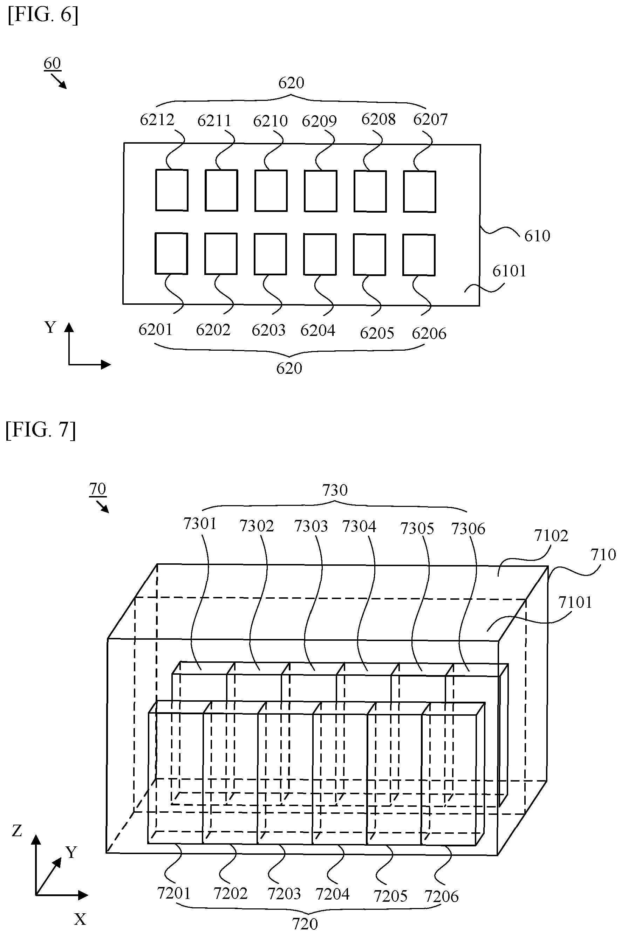

For another example, FIG. 6 is another schematic top view of a structure of a charging power unit along Z-axis according to this embodiment. In FIG. 6, a charging power unit 60 includes a cabinet 610 and a plurality of power conversion modules 620 (for example, a power conversion module 6201, a power conversion module 6202, a power conversion module 6203, a power conversion module 6204, a power conversion module 6205, a power conversion module 6206, a power conversion module 6207, a power conversion module 6208, a power conversion module 6209, a power conversion module 6210, a power conversion module 6211, and a power conversion module 6212). The plurality of power conversion modules 620 are stacked in two rows in the X direction in the first accommodating cavity 6101 of the cabinet 610. The power conversion module 6201, the power conversion module 6202, the power conversion module 6203, the power conversion module 6204, the power conversion module 6205, the power conversion module 6206, and the like are stacked into a row, and the power conversion module 6207, the power conversion module 6208, the power conversion module 6209, the power conversion module 6210, the power conversion module 6211, the power conversion module 6212, and the like are stacked into a row.

### [Solution 2]

In "Solution 2", in this embodiment, a stacking direction of a plurality of power conversion modules and a plurality of power allocation modules in a charging power unit may be changed from original longitudinal stacking to lateral stacking. That is, the plurality of power conversion modules and the plurality of power allocation modules are changed from being stacked in a vertical direction originally to being stacked in a horizontal direction. In this way, the stacking direction of the plurality of power conversion modules and the plurality of power allocation modules is changed, to avoid an excessively large height of the modular charging power unit as much as possible.

In the following description in this embodiment, an example in which the longitudinal direction is the Z direction in the three-dimensional coordinate system, and the lateral direction is an X direction in the three-dimensional coordinate system is used for specific description.

In "Solution 2", in this embodiment, an accommodating cavity of a cabinet body of the charging power unit may be divided into two accommodating cavities: a front accommodating cavity and a rear accommodating cavity (for ease of description, the two accommodating cavities are respectively a "first accommodating cavity" and a "second accommodating cavity") in a Y direction (for ease of description, the "Y direction" herein may be referred to as a "first direction"). Then the plurality of power conversion modules are placed in the first accommodating cavity, and the plurality of power allocation modules are placed in the second accommodating cavity. The plurality of power conversion modules are stacked in the X direction in the first accommodating cavity, and the plurality of power allocation modules are stacked in the X direction (for ease of description, the "X direction" herein may be referred to as a "second direction") in the second accommodating cavity.

For example, FIG. 7 is a diagram of another structure of a charging power unit according to this embodiment. In FIG. 7, the charging power unit 70 includes a cabinet 710, a plurality of power conversion modules 720 (for example, a power conversion module 7201, a power conversion module 7202, a power conversion module 7203, a power conversion module 7204, a power conversion module 7205, and a power conversion module 7206), and a plurality of power allocation modules 730 (for example, a power allocation module 7301, a power allocation module 7302, a power allocation module 7303, a power allocation module 7304, a power allocation module 7305, and a power allocation module 7306). An accommodating cavity of the cabinet 710 is divided into a front first accommodating cavity 7101 and a rear second accommodating cavity 7102 in the Y direction. The plurality of power conversion modules 720 are stacked in the X direction in the first accommodating cavity 7101, and the plurality of power allocation modules 730 are stacked in the X direction in the second accommodating cavity 7102.

Optionally, the plurality of power conversion modules are stacked in a single row or a plurality of rows in the first accommodating cavity; and the plurality of power allocation modules are stacked in a single row or a plurality of rows in the second accommodating cavity.

In this way, in this embodiment, whether the plurality of power conversion modules or the plurality of power allocation modules are stacked in a single row or a plurality of rows in the accommodating cavity of a cabinet body is flexibly set as required. When the plurality of power conversion modules or the plurality of power allocation modules are stacked in a single row, in this embodiment, the plurality of power conversion modules or the plurality of power allocation modules can be stacked simply and quickly. When the plurality of power conversion modules or the plurality of power allocation modules are stacked in a plurality of rows, in this embodiment, more power conversion modules or power allocation modules are placed in the limited cabinet body, to improve space utilization.

### [Solution 3]

In "Solution 3", the plurality of power conversion modules and the plurality of power allocation modules mentioned in the foregoing "Solution 1" or "Solution 2" are further described.

In "solution 3", the plurality of power conversion modules include a plurality of alternating-current rectifier modules and a plurality of direct-current voltage regulation modules, and the plurality of alternating-current rectifier modules and the plurality of direct-current voltage regulation modules are stacked in the X direction in the first accommodating cavity.

The plurality of alternating-current rectifier modules may be configured to convert an alternating current input into the charging power unit into a direct current. An alternating-current rectifier module may include an alternating current/direct current (alternating current/direct current, AC/DC) converter.

The plurality of direct-current voltage regulation modules may be configured to regulate a voltage of the direct current output by the plurality of alternating-current rectifier modules. A direct-current voltage regulation module may include a direct current/direct current (direct current/direct current, DC/DC) converter.

In this way, the alternating-current rectifier modules and the direct-current voltage regulation modules convert the alternating current into the direct current and regulate the voltage of the direct current.

Optionally, a part of the plurality of direct-current voltage regulation modules are located on one side of the plurality of alternating-current rectifier modules, and the remaining part of the plurality of direct-current voltage regulation modules are located on the other side of the plurality of alternating-current rectifier modules.

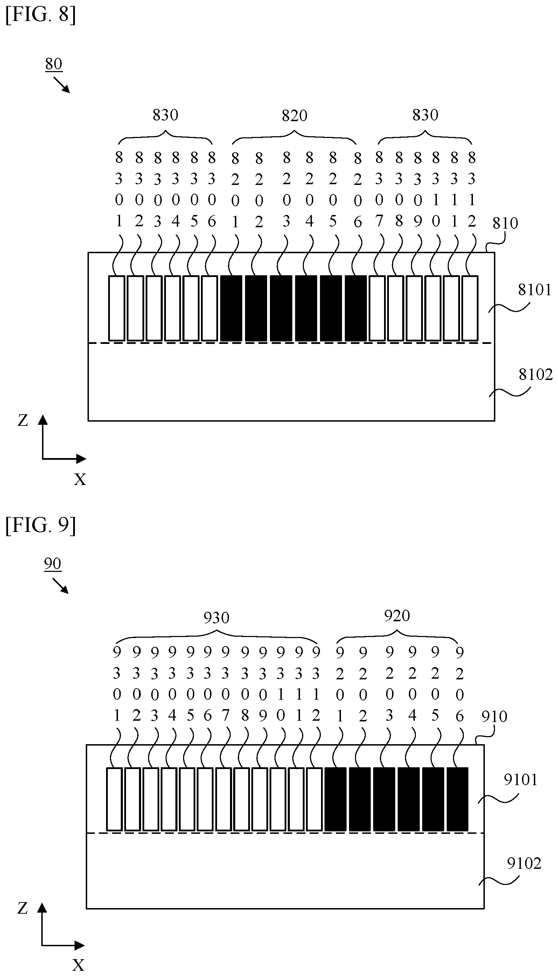

For example, FIG. 8 is a diagram of a front-side structure of a charging power unit along a Y-axis according to this embodiment. In FIG. 8, the charging power unit 80 includes a cabinet 810, a plurality of alternating-current rectifier modules 820 (for example, an alternating-current rectifier module 8201, an alternating-current rectifier module 8202, an alternating-current rectifier module 8203, an alternating-current rectifier module 8204, an alternating-current rectifier module 8205, and an alternating-current rectifier module 8206), and a plurality of direct-current voltage regulation modules 830 (for example, a direct-current voltage regulation module 8301, a direct-current voltage regulation module 8302, a direct-current voltage regulation module 8303, a direct-current voltage regulation module 8304, a direct-current voltage regulation module 8305, a direct-current voltage regulation module 8306, a direct-current voltage regulation module 8307, a direct-current voltage regulation module 8308, a direct-current voltage regulation module 8309, a direct-current voltage regulation module 8310, a direct-current voltage regulation module 8311, and a direct-current voltage regulation module 8312). An accommodating cavity of the cabinet 810 is divided into an upper first accommodating cavity 8101 and a lower second accommodating cavity 8102 in the Z direction. The plurality of alternating-current rectifier modules 820 and the plurality of direct-current voltage regulation modules 830 are stacked in the X direction in the first accommodating cavity 8101. A part of the plurality of direct-current voltage regulation modules 830 are located on one side of the plurality of alternating-current rectifier modules 820, and the remaining part of the plurality of direct-current voltage regulation modules 830 are located on the other side of the plurality of alternating-current rectifier modules 820.

In this way, when a quantity of direct-current voltage regulation modules needs to be reduced, in this embodiment, a direct-current voltage regulation module located on one side of the plurality of alternating-current rectifier modules may be removed quickly and conveniently, to avoid a large amount of adjustment performed on the entire stacked power conversion modules, so as to reduce an adjustment workload and time.

Optionally, the plurality of direct-current voltage regulation modules are entirely located on one side of the plurality of alternating-current rectifier modules. That is, all the direct-current voltage regulation modules are stacked together, and all the alternating-current rectifier modules are stacked together.

For example, FIG. 9 is a diagram of another front-side structure of a charging power unit along a Y-axis according to this embodiment. In FIG. 9, the charging power unit 90 includes a cabinet 910, a plurality of alternating-current rectifier modules 920 (for example, an alternating-current rectifier module 9201, an alternating-current rectifier module 9202, an alternating-current rectifier module 9203, an alternating-current rectifier module 9204, an alternating-current rectifier module 9205, and an alternating-current rectifier module 9206), and a plurality of direct-current voltage regulation modules 930 (for example, a direct-current voltage regulation module 9301, a direct-current voltage regulation module 9302, a direct-current voltage regulation module 9303, a direct-current voltage regulation module 9304, a direct-current voltage regulation module 9305, a direct-current voltage regulation module 9306, a direct-current voltage regulation module 9307, a direct-current voltage regulation module 9308, a direct-current voltage regulation module 9309, a direct-current voltage regulation module 9310, a direct-current voltage regulation module 9311, and a direct-current voltage regulation module 9312). An accommodating cavity of the cabinet 910 is divided into an upper first accommodating cavity 9101 and a lower second accommodating cavity 9102 in the Z direction. The plurality of alternating-current rectifier modules 920 and the plurality of direct-current voltage regulation modules 930 are stacked in the X direction in the first accommodating cavity 9101. The plurality of direct-current voltage regulation modules 930 are entirely located on one side of the plurality of alternating-current rectifier modules 920.

In this way, because all the direct-current voltage regulation modules are stacked together, and all the alternating-current rectifier modules are stacked together, in this embodiment, a specific quantity of direct-current voltage regulation modules may be removed quickly and conveniently from all the direct-current voltage regulation modules, or a specific quantity of alternating-current rectifier modules may be removed from all the alternating-current rectifier modules without affecting stacking between other modules.

Optionally, the plurality of alternating-current rectifier modules are connected through an alternating-current busbar, and the alternating-current busbar is configured to transmit an alternating current. The alternating-current busbar may be a conductive material used to transfer and allocate an alternating current, may be made of copper or aluminum, and may be in a flat or long strip shape.

In this way, through the alternating-current busbar, an alternating current can be input into the plurality of alternating-current rectifier modules and transmitted between the plurality of alternating-current rectifier modules.

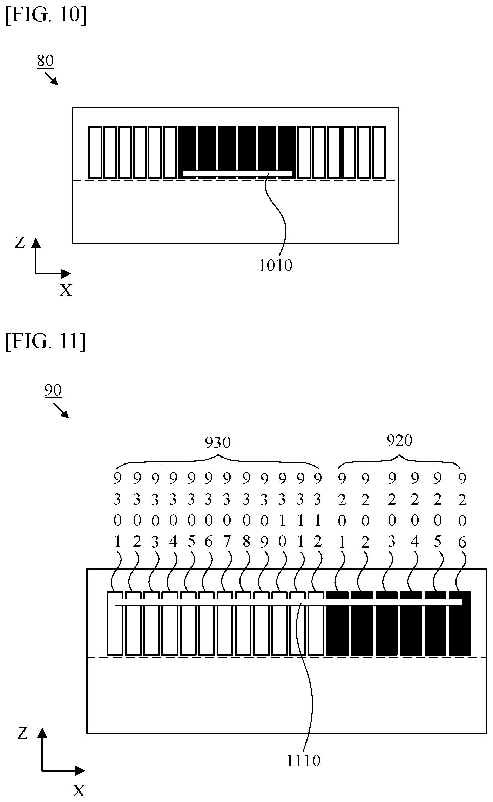

For example, as shown in FIG. 10, based on FIG. 8, the plurality of alternating-current rectifier modules 820 are connected through an alternating-current busbar 1010.

Optionally, the alternating-current busbar has a photovoltaic power integration function. The alternating-current busbar has the photovoltaic power integration function. It may be understood that the alternating-current busbar can transmit an alternating current output by a photovoltaic power generation system.

It can be learned that the charging apparatus in this embodiment may be connected to the photovoltaic power generation system, and convert, by using the alternating-current rectifier modules, the alternating current output by the photovoltaic power generation system into a direct current. In this way, the charging apparatus in this embodiment may charge an electric vehicle by using the alternating current of the photovoltaic power generation system.

Optionally, the plurality of alternating-current rectifier modules are connected to the plurality of direct-current voltage regulation modules through a direct-current busbar, and the direct-current busbar is configured to transmit a direct current. The direct-current busbar may be a conductive material used to transfer and allocate a direct current, may be made of copper or aluminum, and may be in a flat or long strip shape.

For example, as shown in FIG. 11, based on FIG. 9, the plurality of alternating-current rectifier modules 920 are connected to the plurality of direct-current voltage regulation modules through an alternating-current busbar 1110.

In this way, through the direct-current busbar, a direct current output by the plurality of alternating-current rectifier modules can be transmitted to the plurality of direct-current voltage regulation modules, and the direct current can be transmitted between the plurality of direct-current voltage regulation modules.

Optionally, the direct-current busbar has a stackable energy storage function. The direct-current busbar has the stackable energy storage function. It may be understood that the direct-current busbar can transmit a direct current output by an energy storage device. The energy storage device is a device that can store a direct current.

It can be learned that the charging apparatus in this embodiment may be connected to the energy storage device and may regulate a voltage of the direct current output by the energy storage device by using the direct-current voltage regulation modules. In this way, the charging apparatus in this embodiment may charge the electric vehicle by using the direct current of the energy storage device.

Optionally, a part of the plurality of alternating-current rectifier modules are connected to a part of the plurality of direct-current voltage regulation modules through a first direct-current busbar, and the remaining part of the plurality of alternating-current rectifier modules are connected to the remaining part of the plurality of direct-current voltage regulation modules through a second direct-current busbar. The first direct-current busbar and the second direct-current busbar are configured to transmit direct currents, and the first direct-current busbar is different from the second direct-current busbar.

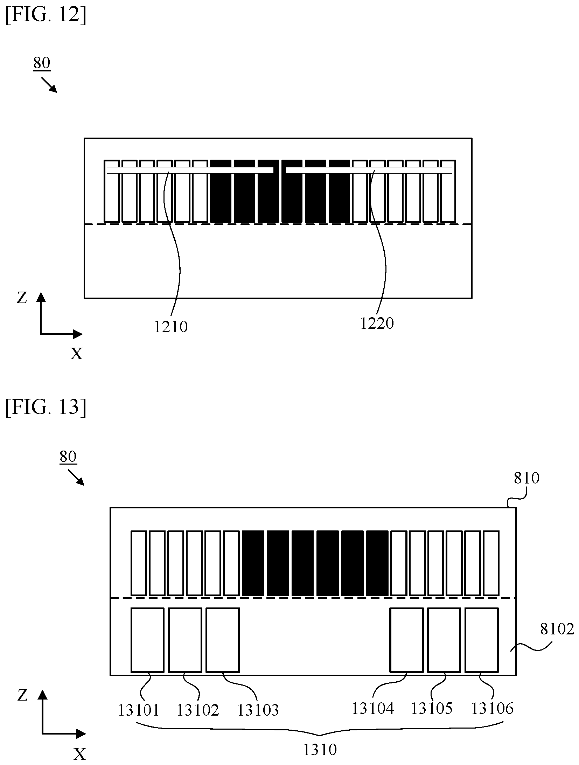

For example, as shown in FIG. 12, based on FIG. 8, a part of the plurality of alternating-current rectifier modules 820 are connected to a part of the plurality of direct-current voltage regulation modules 830 through a first direct current busbar 1210, and the remaining part of the plurality of alternating-current rectifier modules 820 are connected to the remaining part of the plurality of direct-current voltage regulation modules 830 through a second direct current busbar 1220.

It can be learned that, in this embodiment, a part of the alternating-current rectifier modules may be connected to a part of the direct-current voltage regulation modules through the first direct-current busbar, and the remaining part of the alternating-current rectifier modules may be connected to the remaining part of the direct-current voltage regulation modules through the second direct-current busbar. In this way, when the alternating-current rectifier modules and the direct-current voltage regulation modules need to be reduced, in this embodiment, a line of a direct-current busbar may be conveniently and quickly adjusted, and a line of another direct-current busbar is not adjusted, so that an adjustment amount of a line of the direct-current busbar is reduced.

Optionally, the first direct-current busbar, the second-direct current busbar, or both have the stackable energy storage function.

It can be learned that the charging apparatus in this embodiment may be connected to the energy storage device and may regulate the voltage of the direct current output by the energy storage device by using the direct-current voltage regulation modules. In this way, the charging apparatus in this embodiment may charge the electric vehicle by using the direct current of the energy storage device.

Optionally, the plurality of direct-current voltage regulation modules are directly plugged into the plurality of power allocation modules.

In this way, a transmission loss of the direct current between the plurality of direct-current voltage regulation modules and the plurality of power allocation modules can be reduced through direct insertion, and line arrangement between the plurality of direct-current voltage regulation modules and the plurality of power allocation modules is reduced, to reduce use of a line material and improve space utilization.

For example, as shown in FIG. 13, based on FIG. 8, the charging power unit 80 further includes a plurality of power allocation modules 1310 (for example, a power allocation module 13101, a power allocation module 13102, a power allocation module 13103, a power allocation module 13104, a power allocation module 13105, and a power allocation module 13106), and the plurality of power allocation modules 1310 are stacked in the X direction in the second accommodating cavity 8102. The direct-current voltage regulation module 8301 and the direct-current voltage regulation module 8302 are directly plugged into the power allocation module 13101. The direct-current voltage regulation module 8303 and the direct-current voltage regulation module 8304 are directly plugged into the power allocation module 13102. The direct-current voltage regulation module 8305 and the direct-current voltage regulation module 8306 are directly plugged into the power allocation module 13103. The direct-current voltage regulation module 8307 and the direct-current voltage regulation module 8308 are directly plugged into the power allocation module 13104. The direct-current voltage regulation module 8309 and the direct-current voltage regulation module 8310 are directly plugged to the power allocation module 13105. The direct-current voltage regulation module 8311 and the direct-current voltage regulation module 8312 are directly plugged into the power allocation module 13106.

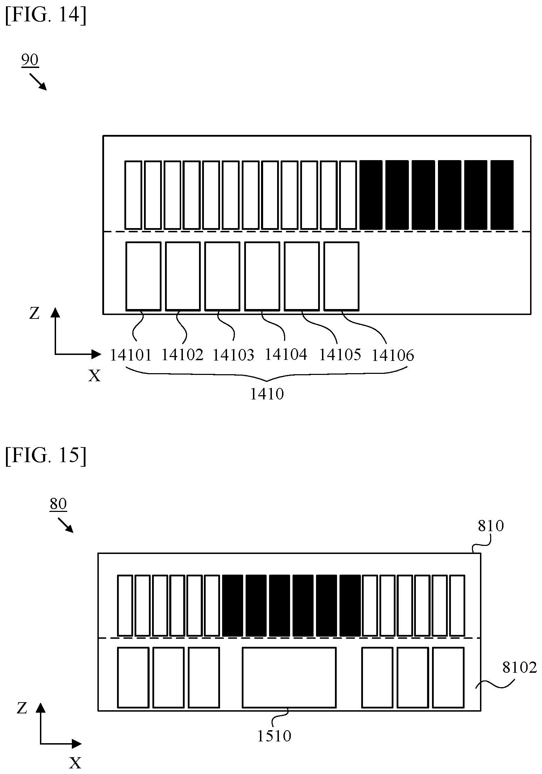

For another example, as shown in FIG. 14, based on FIG. 9, the charging power unit 90 further includes a plurality of power allocation modules 1410 (for example, a power allocation module 14101, a power allocation module 14102, a power allocation module 14103, a power allocation module 14104, a power allocation module 14105, and a power allocation module 14106), and the plurality of power allocation modules 1410 are stacked in the X direction in the second accommodating cavity 9102. The direct-current voltage regulation module 9301 and the direct-current voltage regulation module 9302 are directly plugged into the power allocation module 14101. The direct-current voltage regulation module 9303 and the direct-current voltage regulation module 9304 are directly plugged into the power allocation module 14102. The direct-current voltage regulation module 9305 and the direct-current voltage regulation module 9306 are directly plugged into the power allocation module 14103. The direct-current voltage regulation module 9307 and the direct-current voltage regulation module 9308 are directly plugged into the power allocation module 14104. The direct-current voltage regulation module 9309 and the direct-current voltage regulation module 9310 are directly plugged to the power allocation module 14105. The direct-current voltage regulation module 9311 and the direct-current voltage regulation module 9312 are directly plugged into the power allocation module 14106.

Optionally, a ratio of a quantity of the plurality of alternating-current rectifier modules to a quantity of the plurality of direct-current voltage regulation modules is inversely proportional to a ratio of power of the plurality of alternating-current rectifier modules to power of the plurality of direct-current voltage regulation modules.

It can be learned that because the alternating-current rectifier modules are configured to convert the alternating current input into the charging power unit into the direct current, and the direct-current voltage regulation modules are configured to regulate the voltage of the direct current output by the alternating-current rectifier modules, in this embodiment, it needs to be ensured that the ratio of the quantity of alternating-current rectifier modules to the quantity of direct-current voltage regulation modules is inversely proportional to the ratio of the power of the plurality of alternating-current rectifier modules to the power of the plurality of direct-current voltage regulation modules. In this way, the quantity of alternating-current rectifier modules multiplied by the power of one alternating-current rectifier module may be equal to the quantity of direct-current voltage regulation modules multiplied by the power of one direct-current voltage regulation module.

### [Solution 4]

In "Solution 4", the charging power unit mentioned in the foregoing "Solution 1", "Solution 2", or "Solution 3" further includes an alternating-current input module. The alternating-current input module may be configured to receive an alternating current and input the alternating current into the plurality of power conversion modules. The alternating-current input module and the plurality of power allocation modules are stacked in the second direction in the second accommodating cavity.

In this way, through the alternating-current input module, an alternating current may be input into the charging power unit from the outside, and the alternating current may be transmitted to the power conversion modules for processing.

Optionally, a part of the plurality of power allocation modules are located on one side of the alternating-current input module, and the remaining part of the plurality of power allocation modules are located on the other side of the alternating-current input module.

For example, as shown in FIG. 15, based on FIG. 13, the charging power unit 80 further includes an alternating-current input module 1510. The alternating-current input module 1510 and the plurality of power allocation modules 1310 are stacked in the X direction in the second accommodating cavity 8102. A part of the plurality of power allocation modules 1310 are located on one side of the alternating-current input module 1510, and the remaining part of the plurality of power allocation modules 1310 are located on the other side of the alternating-current input module 1510.

In this way, when a quantity of power allocation modules needs to be reduced, in this embodiment, a power allocation module located on one side of the alternating-current input module may be removed quickly and conveniently, to avoid a large amount of adjustment performed on the entire stacked power allocation modules, so as to reduce an adjustment workload and time.

Optionally, the plurality of power allocation modules are entirely located on one side of the alternating-current input module. That is, all power allocation modules are stacked together.

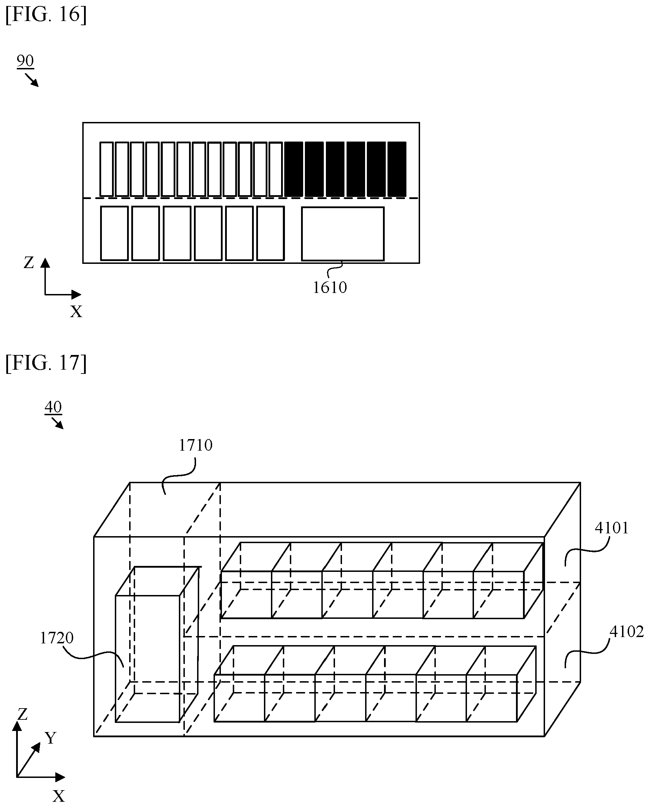

For example, as shown in FIG. 16, based on FIG. 14, the charging power unit 90 further includes an alternating-current input module 1610. The alternating-current input module 1610 and the plurality of power allocation modules 1410 are stacked in the X direction in the second accommodating cavity 9102. The plurality of power allocation modules 1410 are entirely located on one side of the alternating-current input module 1610.

In this way, because all the power allocation modules are stacked together, in this embodiment, a specific quantity of power allocation modules can be removed quickly and conveniently from all the power allocation modules without affecting stacking between other modules.

### [Solution 5]

In "Solution 5", the charging power unit mentioned in the foregoing "Solution 1", "Solution 2", "Solution 3", or "Solution 4" further includes a liquid-cooling heat dissipation module, the cabinet body of the charging power unit further includes a third accommodating cavity, and the liquid-cooling heat dissipation module is located in the third accommodating cavity. The liquid-cooling heat dissipation module is configured to: perform heat exchange with an external environment and transfer a cooled coolant to a module of the charging power unit through a liquid-cooling pipeline. In this way, the liquid-cooling heat dissipation module can perform heat dissipation for a module (such as the power conversion modules or the power allocation modules) of the charging power unit.

For example, the liquid-cooling heat dissipation module includes a component such as a water pump, a heat exchanger, a fan, a water kettle, a pipeline, or a stop valve, to provide a coolant for the charging power unit and release, to the external environment in a form of heat exchange, heat in the coolant that flows back.

The following describes position relationships between the third accommodating cavity and the first and second accommodating cavities in the following plurality of manners.

### "Manner 1"

The accommodating cavity of the cabinet body in "Solution 1" is divided into the upper first accommodating cavity and the lower second accommodating cavity in the Z direction. The plurality of power conversion modules are stacked in the X direction in the first accommodating cavity, and the plurality of power allocation modules are stacked in the X direction in the second accommodating cavity. Therefore, in "Manner 1", the third accommodating cavity and the first and second accommodating cavities may be sequentially arranged in the X direction and spaced apart.

In this way, because the liquid-cooling heat dissipation module is in the third accommodating cavity, the liquid-cooling heat dissipation module, the plurality of power conversion modules, and the plurality of power allocation modules are all disposed in the X direction, to avoid an excessively large height of the modular charging power unit.

Optionally, the third accommodating cavity is on one side or two sides of the first accommodating cavity and the second accommodating cavity.

For example, the third accommodating cavity is on one side of the first accommodating cavity and the second accommodating cavity. As shown in FIG. 17, based on FIG. 4, the cabinet 410 further includes a third accommodating cavity 1710, and the third accommodating cavity 1710 and the first and second accommodating cavities 4101 and 4102 are sequentially arranged in the X direction and are spaced apart. The charging power unit 40 further includes a liquid-cooling heat dissipation module 1720, and the liquid-cooling heat dissipation module 1720 is in the third accommodating cavity 1710. In this way, the liquid-cooling heat dissipation module 1720, the plurality of power conversion modules 420, and the plurality of power allocation modules 430 are all disposed in the X direction.

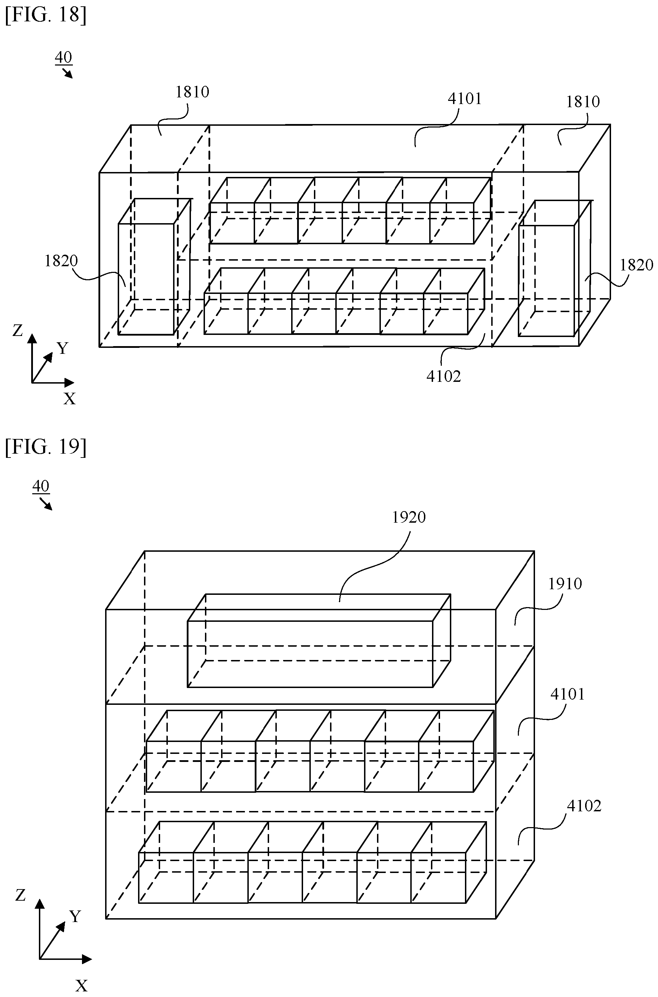

For another example, third accommodating cavities are on two sides of the first accommodating cavity and the second accommodating cavity. As shown in FIG. 18, based on FIG. 4, the cabinet 410 further includes third accommodating cavities 1810, the third accommodating cavities 1810 and the first and second accommodating cavities 4101 and 4102 are sequentially arranged in the X direction and are spaced apart, and the third accommodating cavities 1810 are on two sides of the first accommodating cavity 4101 and the second accommodating cavity 4102. The charging power unit 40 further includes a liquid-cooling heat dissipation module 1820, and the liquid-cooling heat dissipation module 1820 is in the third accommodating cavity 1810. In this way, the liquid-cooling heat dissipation module 1820, the plurality of power conversion modules 420, and the plurality of power allocation modules 430 are all disposed in the X direction.

### "Manner 2"

The accommodating cavity of the cabinet body in "Solution 1" is divided into the upper first accommodating cavity and the lower second accommodating cavity in the Z direction. Therefore, in " Manner 2", the third accommodating cavity and the first and second accommodating cavities may be sequentially arranged in the Z direction and spaced apart.

In this way, because the liquid-cooling heat dissipation module is in the third accommodating cavity, the liquid-cooling heat dissipation module may be disposed at the top of the charging power unit. In addition, the liquid-cooling heat dissipation module is disposed at the top of the charging power unit, so that heat dissipation efficiency can be improved, and noise generated by the liquid-cooling heat dissipation module can be reduced.

Optionally, the third accommodating cavity is on one side or two sides of the first accommodating cavity and the second accommodating cavity.

For example, the third accommodating cavity is on one side of the first accommodating cavity and the second accommodating cavity. As shown in FIG. 19, based on FIG. 4, the cabinet 410 further includes a third accommodating cavity 1910, and the third accommodating cavity 1910 and the first and second accommodating cavities 4101 and 4102 are sequentially arranged in the Z direction and are spaced apart. The charging power unit 40 further includes a liquid-cooling heat dissipation module 1920, and the liquid-cooling heat dissipation module 1920 is in the third accommodating cavity 1910. In this way, the liquid-cooling heat dissipation module 1920 is disposed at the top of the charging power unit 40.

### "Manner 3"

The accommodating cavity of the cabinet body in "Solution 2" is divided into the front first accommodating cavity and the rear second accommodating cavity in the Y direction. The plurality of power conversion modules are stacked in the X direction in the first accommodating cavity, and the plurality of power allocation modules are stacked in the X direction in the second accommodating cavity. Therefore, in "Manner 3", the third accommodating cavity and the first and the second accommodating cavities may be sequentially arranged in the X direction and spaced apart.

In this way, because the liquid-cooling heat dissipation module is in the third accommodating cavity, the liquid-cooling heat dissipation module, the plurality of power conversion modules, and the plurality of power allocation modules are all disposed in the X direction, to avoid an excessively large height of the modular charging power unit.

Optionally, the third accommodating cavity is on one side or two sides of the first accommodating cavity and the second accommodating cavity.

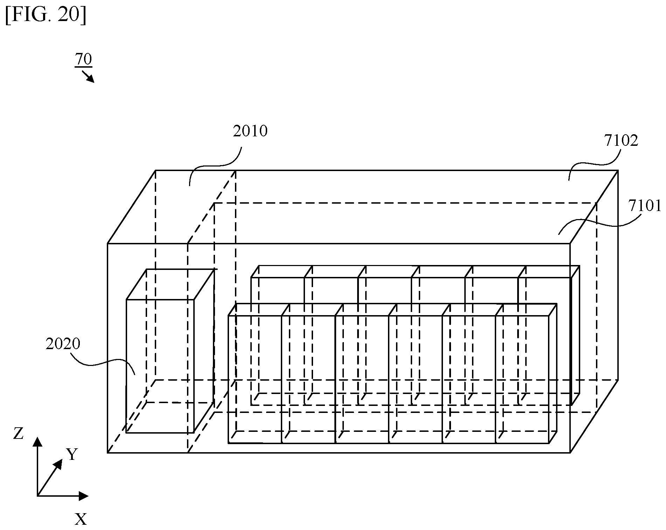

For example, the third accommodating cavity is on one side of the first accommodating cavity and the second accommodating cavity. As shown in FIG. 20, based on FIG. 7, the cabinet 710 further includes a third accommodating cavity 2010, and the third accommodating cavity 2010 and the first and second accommodating cavities 7101 and 7102 are sequentially arranged in the X direction and are spaced apart. The charging power unit 70 further includes a liquid-cooling heat dissipation module 2020, and the liquid-cooling heat dissipation module 2020 is in the third accommodating cavity 2010. In this way, the liquid-cooling heat dissipation module 2020, the plurality of power conversion modules 720, and the plurality of power allocation modules 730 are all disposed in the X direction.

### "Manner 4"

The accommodating cavity of the cabinet body in "Solution 2" is divided into the front first accommodating cavity and the rear second accommodating cavity in the Y direction. Therefore, in " Manner 4", the third accommodating cavity and the first and second accommodating cavities may be sequentially arranged in the Z direction and spaced apart.

In this way, because the liquid-cooling heat dissipation module is in the third accommodating cavity, the liquid-cooling heat dissipation module may be disposed at the top of the charging power unit. In addition, the liquid-cooling heat dissipation module is disposed at the top of the charging power unit, so that heat dissipation efficiency can be improved, and noise generated by the liquid-cooling heat dissipation module can be reduced.

Optionally, the third accommodating cavity is on one side or two sides of the first accommodating cavity and the second accommodating cavity.

### [Solution 6]

In "solution 6", the cabinet body of the charging power unit mentioned in the foregoing "Solution 1", "Solution 2", "Solution 3", "Solution 4", or "Solution 5" may include a plurality of cabinet doors. In this way, an internal space of the cabinet body may be opened through the plurality of cabinet doors, to facilitate arrangement of modules in the cabinet body.

It should be noted that the plurality of cabinet doors may be opened by pulling the cabinet doors outward, by sliding the cabinet doors up and down, by sliding the cabinet doors left and right, or the like. In addition, the plurality of cabinet doors may be retracted, non-retractable, or the like.

Optionally, the plurality of cabinet doors may be disposed opposite to each other in the X direction or the Y direction. In this way, in this embodiment, the cabinet doors may be opened in the Y direction, to view modules stacked in the X direction.

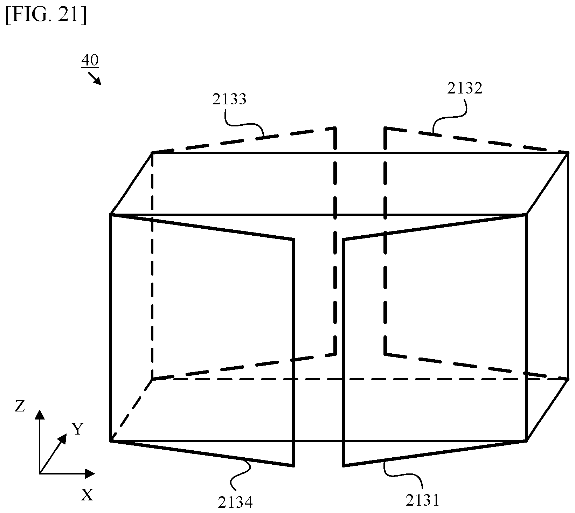

For example, as shown in FIG. 21, based on FIG. 4, the cabinet 410 includes a cabinet door 2111, a cabinet door 2112, a cabinet door 2113, and a cabinet door 2114. The cabinet door 2111 and the cabinet door 2114 are disposed opposite to each other in the X direction, the cabinet door 2112 and the cabinet door 2113 are disposed opposite to each other in the X direction, the cabinet door 2111 and the cabinet door 2113 are disposed opposite to each other in the Y direction, and the cabinet door 2113 and the cabinet door 2114 are disposed opposite to each other in the Y direction.

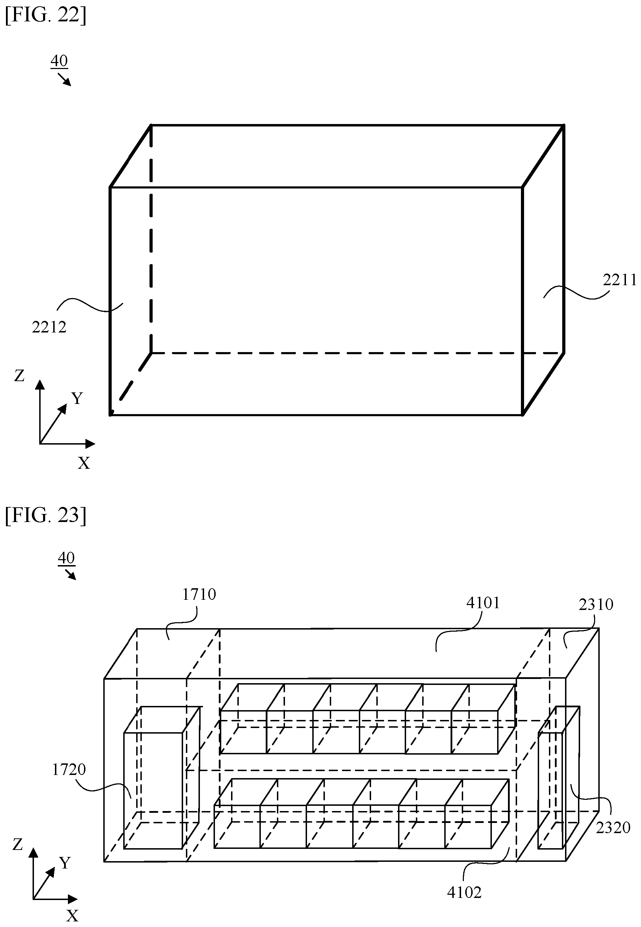

For another example, as shown in FIG. 22, based on FIG. 4, the cabinet 410 includes a cabinet door 2211 and a cabinet door 2212. The cabinet door 2211 and the cabinet door 2212 are disposed opposite to each other in the X direction.

### [Solution 7]

In "Solution 7", the charging power unit mentioned in the foregoing "Solution 1", "Solution 2", "Solution 3", "Solution 4", "Solution 5", or "Solution 6" is in the charging apparatus, and the charging apparatus further includes at least one charging terminal.

In specific implementation, the charging power unit further includes a charging connection module, and the charging connection module is configured to connect the charging power unit and the at least one charging terminal. The cabinet body further includes a fourth accommodating cavity. The fourth accommodating cavity and the first and second accommodating cavities are sequentially arranged in the X direction and are spaced apart. The charging connection module is located in the fourth accommodating cavity.

For example, as shown in FIG. 23, based on FIG. 17, the cabinet 410 further includes a fourth accommodating cavity 2310, and the fourth accommodating cavity 2310, the first and second accommodating cavities 4101 and 4102, and the third accommodating cavity 1710 are sequentially arranged in the X direction and are spaced apart. The charging power unit 40 further includes a charging connection module 2320, and the charging connection module 2320 is in the fourth accommodating cavity 2310. In this way, the charging connection module 2320, the liquid-cooling heat dissipation module 1720, the plurality of power conversion modules 420, and the plurality of power allocation modules 430 are all disposed in the X direction.

In this way, the charging power unit can be connected to the at least one charging terminal through the charging connection module, to form an integrated charging device integrating the charging power unit and the charging terminal.

Optionally, the charging connection module separately connects the plurality of power allocation modules and the at least one charging terminal.

Optionally, the charging connection module includes charging-related components such as a contactor, a fuse protection component, a current detection component, and a charging control board.

Optionally, the charging apparatus further includes a screen. The screen is disposed on a first outer side surface of the cabinet body, and the first outer side surface faces the X direction. In this way, a related power parameter of the charging apparatus may be viewed on the screen.

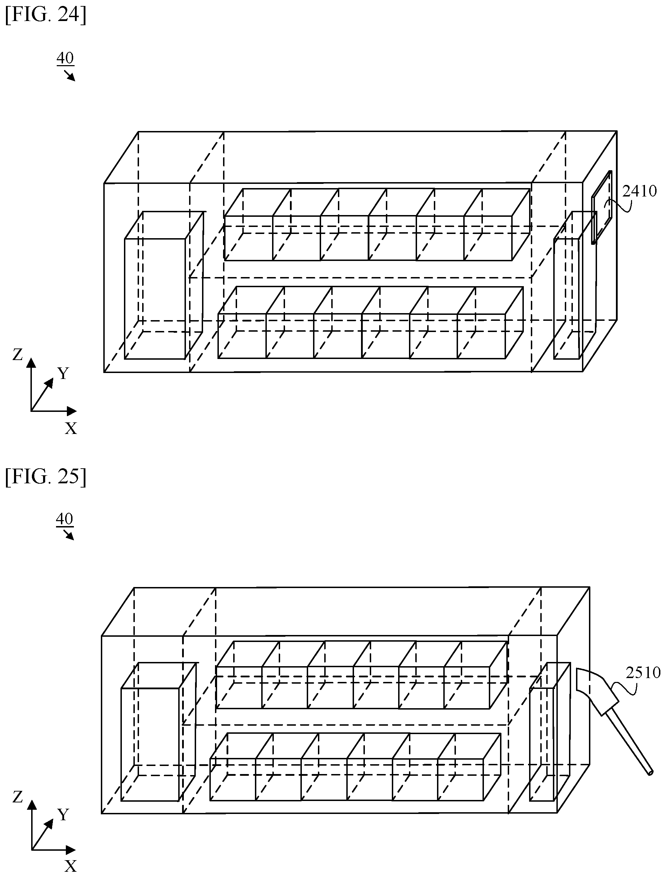

For example, as shown in FIG. 24, based on FIG. 23, the charging apparatus further includes a screen 2410.

Optionally, the at least one charging terminal includes at least one charging connector, the at least one charging connector is disposed on a first outer side surface of the cabinet body, and the first outer side surface faces the X direction. In this way, the at least one charging connector can be used to implement connection to the electric vehicle, and charge the electric vehicle.

For example, as shown in FIG. 25, based on FIG. 23, the charging apparatus further includes at least one charging connector 2510.

In the foregoing specific implementations, the objectives, technical solutions, and beneficial effect of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A charging apparatus, wherein the charging apparatus comprises a charging power unit, and the charging power unit comprises:
a cabinet body, comprising a first accommodating cavity and a second accommodating cavity, wherein the first accommodating cavity and the second accommodating cavity are sequentially arranged in a first direction and are spaced apart;
a plurality of power conversion modules, configured to convert an input alternating current into a direct current; and
a plurality of power allocation modules, configured to perform power allocation on the direct current output by the plurality of power conversion modules, wherein
the plurality of power conversion modules are stacked in a second direction in the first accommodating cavity, wherein the first direction is different from the second direction; and
the plurality of power allocation modules are stacked in the second direction in the second accommodating cavity.

2. The charging apparatus according to claim 1, wherein the plurality of power conversion modules are stacked in a single row or a plurality of rows in the second direction in the first accommodating cavity; and
the plurality of power allocation modules are stacked in a single row or a plurality of rows in the second direction in the second accommodating cavity.

3. The charging apparatus according to claim 1 or 2, wherein the plurality of power conversion modules comprise a plurality of alternating-current rectifier modules and a plurality of direct-current voltage regulation modules;
the plurality of alternating-current rectifier modules are configured to convert an alternating current input into the charging power unit into a direct current;
the plurality of direct-current voltage regulation modules are configured to regulate a voltage of the direct current output by the plurality of alternating-current rectifier modules; and
the plurality of alternating-current rectifier modules and the plurality of direct-current voltage regulation modules are stacked in the second direction in the first accommodating cavity.

4. The charging apparatus according to claim 3, wherein a part of the plurality of direct-current voltage regulation modules are located on one side of the plurality of alternating-current rectifier modules, and the remaining part of the plurality of direct-current voltage regulation modules are located on the other side of the plurality of alternating-current rectifier modules; or
the plurality of direct-current voltage regulation modules are entirely located on one side of the plurality of alternating-current rectifier modules.

5. The charging apparatus according to claim 3 or 4, wherein the plurality of alternating-current rectifier modules are connected through an alternating-current busbar, and the alternating-current busbar is configured to transmit an alternating current.

6. The charging apparatus according to claim 5, wherein the alternating-current busbar has a photovoltaic power integration function.

7. The charging apparatus according to any one of claims 3 to 6, wherein the plurality of alternating-current rectifier modules are connected to the plurality of direct-current voltage regulation modules through a direct-current busbar, and the direct-current busbar is configured to transmit a direct current; or
a part of the plurality of alternating-current rectifier modules are connected to a part of the plurality of direct-current voltage regulation modules through a first direct-current busbar, the remaining part of the plurality of alternating-current rectifier modules are connected to the remaining part of the plurality of direct-current voltage regulation modules through a second direct-current busbar, the first direct-current busbar and the second direct-current busbar are configured to transmit direct currents, and the first direct-current busbar is different from the second direct-current busbar.

8. The charging apparatus according to claim 5, wherein the direct-current busbar has a stackable energy storage function; or
the first direct-current busbar, the second direct-current busbar, or both have a stackable energy storage function.

9. The charging apparatus according to any one of claims 3 to 8, wherein the plurality of direct-current voltage regulation modules are directly plugged into the plurality of power allocation modules.

10. The charging apparatus according to any one of claims 3 to 9, wherein a ratio of a quantity of the plurality of alternating-current rectifier modules to a quantity of the plurality of direct-current voltage regulation modules is inversely proportional to a ratio of power of the plurality of alternating-current rectifier modules to power of the plurality of direct-current voltage regulation modules.

11. The charging apparatus according to any one of claims 1 to 10, wherein the charging power unit further comprises an alternating-current input module, and the alternating-current input module is configured to receive an alternating current and input the alternating current into the plurality of power conversion modules; and
the alternating-current input module and the plurality of power allocation modules are stacked in the second direction in the second accommodating cavity.

12. The charging apparatus according to claim 11, wherein a part of the plurality of power allocation modules are located on one side of the alternating-current input module, and the remaining part of the plurality of power allocation modules are located on the other side of the alternating-current input module; or
the plurality of power allocation modules are entirely located on one side of the alternating-current input module.

13. The charging apparatus according to any one of claims 1 to 12, wherein the charging power unit further comprises a liquid-cooling heat dissipation module, and the liquid-cooling heat dissipation module is configured to: perform heat exchange with an external environment and transfer a cooled coolant to a module of the charging power unit through a liquid-cooling pipeline;
the cabinet body further comprises a third accommodating cavity, and the third accommodating cavity and the first and second accommodating cavities are sequentially arranged in the first direction or the second direction and are spaced apart; and
the liquid-cooling heat dissipation module is located in the third accommodating cavity.

14. The charging apparatus according to claim 13, wherein the third accommodating cavity is disposed on one side or two sides of the first accommodating cavity and the second accommodating cavity.

15. The charging apparatus according to claim 13, wherein the cabinet comprises a plurality of cabinet doors, and the plurality of cabinet doors are disposed opposite to each other in the first direction or the second direction.

16. The charging apparatus according to any one of claims 1 to 15, wherein the charging apparatus further comprises at least one charging terminal, and the at least one charging terminal is configured to output a direct current allocated by the plurality of power allocation modules;
the charging power unit further comprises a charging connection module, and the charging connection module is configured to connect the charging power unit and the at least one charging terminal;
the cabinet body further comprises a fourth accommodating cavity, and the fourth accommodating cavity and the first and second accommodating cavities are sequentially arranged in the second direction and are spaced apart; and
the charging connection module is located in the fourth accommodating cavity.

17. The charging apparatus according to claim 16, wherein the at least one charging terminal comprises at least one charging connector; and
the at least one charging connector is disposed on a first outer side surface of the cabinet body, and the first outer side surface faces the second direction.
